# EUROPÄISCHE PATENTSCHRIFT

(11) **EP 0 742 372 B1**
(45) Veröffentlichungstag und Bekanntmachung des Hinweises auf die Patenterteilung: **31.10.2001**
(21) Anmeldenummer: 96106608.1
(22) Anmeldetag: 26.04.1996
(51) Int. Cl.: F04D 29/66, G01N 29/02

(54) **Überwachungssystem zur Feststellung einer Kavitationsintensität**
Monitoring system for detecting cavitation intensity
Système de surveillance pour détecter l'intensité de la cavitation

(30) Priorität: 11.05.1995 DE 19517289
(43) Veröffentlichungstag der Anmeldung: 13.11.1996
(73) Patentinhaber: KSB Aktiengesellschaft, 67227 Frankenthal (DE)
(72) Erfinder: Stoffel, Bernd, Prof. Dr., 64354 Reinheim (DE); Schuller, Werner, Dr., 64295 Darmstadt (DE)

(56) Entgegenhaltungen:
- EP-A- 0 221 796
- EP-A- 0 554 640
- DE-A- 3 725 754
- GB-A- 2 200 991
- US-A- 5 235 524

## Beschreibung

### Technisches Gebiet

Hydraulische Geräte können kavitierende Betriebszustände aufweisen. Bei einer Kavitation entstehende Dampfblasen verursachen bei ihrem implodierenden Zusammenfall in der Nähe einer Wandfläche Materialzerstörungen. Die Kavitation selbst weist unterschiedliche Erscheinungsformen auf. Diese erstrecken sich vom Sichtbarwerden erster mikroskopisch kleiner Dampfbläschen bis zu einer Blasenansammlung, die, beispielsweise bei einer Kreiselpumpe, zum Zusammenbruch der Förderung führen kann. Verfahren zur Erfassung von Kavitationssignalen sollen kavitierende Betriebszustände von unzulässiger Intensität vermeiden helfen.

Es sind Sensoren bekannt, mit deren Hilfe innerhalb eines flüssigkeitsführenden Gerätes Kavitationssignale, d. h. von der Kavitation ausgehende Wechseldrücke, registriert werden können. Ebenso können die von diesen Wechseldrücken angeregten und in der mechanischen Struktur des Gerätes weitergeleiteten Schwingungen in Form des sogenannten Körperschalls mit geeigneten Beschleunigungs- bzw. Körperschallsensoren erfaßt werden. Die von implodierenden Dampfvolumina ausgelösten Wechseldrücke und mechanischen Schwingungen liegen bezüglich ihrer spezifischen Frequenzen vorzugsweise in dem Bereich oberhalb 50 kHz. Bei geeigneter Wahl von Sensoren und Signalverarbeitung lassen sich die für die Kavitation spezifischen Signale daher deutlich von den aus anderen Ursachen, z. B. aus rotordynamischen Wechselkräften, instationären hydrodynamischen Vorgängen, resultierenden Druckschwankungen, Schwingungen und Geräuschen unterscheiden.

Mit der DE-A- 32 36 815 ist eine Kavitationssignale erfassende Einrichtung bekannt. Durch Kavitationserscheinungen hervorgerufene Druckpulse bewirken Spannungsänderungen in Dehnungsmeßstreifen. Mit Hilfe eines Mikroprozessors und iterativer Rechenverfahren soll eine Aussage über das Auftreten von Kavitation erfolgen. Ähnlich verhält es sich bei der EP-A 0 194 474, bei der mit Hilfe einer gemessenen Kavitation eine Regelung eines Förderaggregates auf eine meßtechnisch gerade noch erfaßbare Restkavitation erfolgen soll. Der undefinierte Begriff Restkavitation steht aber der Ausführbarkeit dieses Regelungsgedankens entgegen. Zudem wäre es in den meisten Fällen unwirtschaftlich, ein Förderaggregat nur mit einer meßtechnisch gerade noch erfaßbarer Restkavitation zu betreiben, da eine schädigende Kavitationswirkung von unterschiedlichen Kriterien abhängig ist. Dem Fachmann ist bekannt, daß Werkstoffe gegenüber Kavitation unterschiedliche Beständigkeit aufweisen. Der jeweils zulässige Kavitationsgrad ist somit abhängig von den Gegebenheiten des jeweiligen Einzelfalls. Beide erwähnten Druckschriften weisen jedoch den Nachteil auf, daß die Drucksignale, soweit sie von Kavitation herrühren, keine Aussage über die tatsächliche Intensität des vorliegenden Kavitationszustands zulassen.

Die feststellbaren Signale sind durch die dynamischen Zustände innerhalb eines strömungsführenden Gerätes einer permanenten verändernden Beeinflussung ausgesetzt. Wie dem Aufsatz von V. Kercan, F. Schweiger in "Proceedings of the sixth conference on Fluid Machinery", Band 1, Seiten 535- 544, mit dem Titel: "Cavitation phenomena detection by different methods", Budapest 1979, zu entnehmen ist, liefern zur Kavitationerfassung verwendbare Sensoren unterschiedliche Ergebnisse. Dies liegt darin begründet, daß die Signale auf dem Übertragungsweg von den implodierenden Dampfblasen bis zu ihrer Erfassung mit Hilfe des Sensors unterschiedlichen Effekten z. B. Dämpfung, Reflexionen, Übergang auf ein anderes Übertragungsmedium und Einflüssen, z. B. Eigenschaften des Übertragungsmediums, unterliegen. Entsprechende Untersuchungen wurden z. B. in dem Aufsatz von W. Schuller, B. Stoffel mit dem Titel "Untersuchung von Einflüssen auf kavitationsspezifische Schallsignale" in den Preprints der Pumpentagung Karlsruhe 1992, Sektion A8, veröffentlicht. Anhand der beschriebenen Versuche mit entgasten kalten Wasser wurde aufgezeigt, wie die von einer an der Welle befestigten und im Laufradeintrittsbereich angeordneten Funkenstrecke zu mehreren, an verschieden Stellen des Gehäuses angeordnet Sensoren, über einen separaten Kalibriervorgang unter gleichen Einbau-und Übertragungsbedingungen erfaßt und bei der Bewertung der mit dem Sensor aufgenommenen Kavitationssignale berücksichtigt werden kann. Ein solcher zeitlich von der Erfassung der Kavitationssignale getrennter Kalibriervorgang kann jedoch Unterschiede zwischen den Zuständen, die zum Zeitpunkt der Kalibrierung bzw. im jeweiligen Betriebszustand vorliegen, und deren Auswirkung auf die Signalübertragung nicht erfassen. Solche Unterschiede können z. B. von Veränderungen der Stoffeigenschaften, insbesondere des Gasgehalts, der im Übertragungsweg befindlichen Flüssigkeit herrühren.

Der Erfindung liegt daher die Aufgabe zugrunde, eine Methode und eine Einrichtung zur Gewinnung von Information über die Intensität eines vorherrschenden Kavitationszustands zu entwickeln.

### Darstellung der Erfindung

Die zugrundeliegende Aufgabe wird mit den Merkmalen der Ansprüche 1 und 5 gelöst.

Mit dem erfindungsgemäß vorgeschlagenen Überwachungssystem einer hydraulischen Strömungsmaschine oder eines sonstigen hydraulischen Geräts kann eine exakte Aussage über die Intensität der innerhalb der Maschine auftretenden Kavitation getroffen werden. Durch die Erzeugung eines Referenzsignales kann eine Aussage bezüglich des Signal-Übertragungsverhalten innerhalb der Maschine getroffen werden. Die Signalübertragung von Kavitationsort zu einem Sensor sowie deren mögliche Veränderung während des laufenden Betriebs wird ständig erfaßt und berücksichtigt. Das Referenzsignal, das in seiner Ausgangsform definiert ist, wird auf seinem Weg zu dem empfangenden Sensor infolge von Materialeigenschaften, Mediumeigenschaften und betrieblichen Einflüsse verändert. Aufgrund der Veränderung des Referenzsignales kann somit eine Aussage über ein empfangenes Kavitationssignal getroffen werden. Mit Hilfe der am empfangenen Referenzsignal feststellbaren Signalveränderung kann das Kavitationssignal auf seinen tatsächlichen Ausgangswert zurückgeführt werden. Dieses korrigierte Kavitationssignal läßt eine direkte Aussage über die Intensität des vorherrschenden Kavitationszustands zu. Eine Verknüpfung dieser Werte mit den bekannten Konstruktionsdaten der jeweiligen Maschine und den bekannten Betriebsverhältnissen erlaubt eine sichere Aussage über die schädigende Wirkung der auftretenden Kavitation. Die durch die Messung ermittelte Intensität eines Kavitationszustands dient dabei als ein Maß für die durch die Dampfimplosionen auf die Wand einwirkende Belastung und ermöglicht z. B. die zulässige Beurteilung eines vorherrschenden Kavitationszustands im Hinblick auf die Schädigungsgefahr. Je nach Einsatzfall kann damit eine mehr oder weniger große Kavitation zugelassen werden und damit die betriebliche Verfügbarkeit der Maschine bzw. das Schädigungspotential innerhalb der Maschine erheblich verringert werden. Die Weiterbildung der Erfindung nach Anspruch 2, wonach der Empfang der Referenzsignale und der Kavitationssignale mit einem Sensor erfolgt, ermöglicht in wenig aufwendiger Weise die Signalerfassung. Je nach Konstruktionsprinzip und Aufbau der zu untersuchenden Maschine können selbstverständlich auch getrennte oder mehrere Sensoren zur Erfassung der Signale Verwendung finden. Vorteilhaft ist in jedem Fall ein gleicher oder vergleichbarer Übertragungsweg zwischen dem Ort der Entstehung der Kavitation und dem Ort der Erzeugung der Referenzsignale sowie den der Signalerfassung dienenden Sensoren.

Eine Ausgestaltung nach Anspruch 3 sieht den zeitgleichen Empfang der zu verarbeitenden Signale vor, wobei die anschließende Signalauswertung das aktuelle Übertragungsverhalten der beiden Signale unmittelbar berücksichtigt. Die zeitgleiche Erfassung von Referenzsignal und dem von einem aktuellen Kavitationszustand ausgehenden Kavitationssignal ist für eine fortlaufende Messung und Anlagenüberwachung sehr wichtig. Dem Auftreten eines Kavitationszustandes, der für den jeweiligen Anwendungsfall eine Schädigung des Materials oder des Fördermediums zur Folge haben würde, könnte sofort begegnet werden. Die unmittelbare Berücksichtigung des aktuellen Übertragungsverhalten zwischen der das Referenzsignal erzeugenden Einrichtung und dem empfangenden Sensor erfolgt bei der Auswertung der Sensorsignale in der nachgeordneten Signalverarbeitungselektronik. Aus diesem Grunde können alle Veränderungen der Eigenschaften des Fördermediums, die einen Einfluß auf den Zusammenhang zwischen dem empfangenen Signal am Ende der Meßkette und der auftretenden Kavitationsintensität haben, sofort Online erfaßt und berücksichtigt werden.

Eine weitere Ausgestaltung der Erfindung sieht vor, daß das korrigierte Kavitationssignal eine Steuer- oder Regeleinrichtung beeinflußt. Somit kann in sehr präziser Weise auf eine in Betrieb befindliche Anlage direkt eingewirkt werden und es können die entsprechenden verfahrenstechnischen Maßnahmen ergriffen werden, um die Kavitationsintensität auf einen Wert zurückzufahren, der ohne schädigenden Einfluß auf die gesamte Anlage ist

Wird als Einrichtung zur Erzeugung des Referenzsignales eine Schallquelle installiert, so sieht deren Ausbildung vor, daß sie Schallsignale in definierter Stärke erzeugt, wenn sie hierzu angeregt wird. Die Weiterbildung der Erfindung, die in den Ansprüchen 6 bis 9 beschrieben ist, beschreibt eine Einrichtung zur Erfassung der Kavitationssignale. Mit Hilfe einer definierten Form des Referenzsignales, beispielsweise durch einen vorgegebenen Zeitverlauf oder eine genau definierte Frequenz, was mit Hilfe eines Funkengenerators, eines Unterwasserschallsenders oder ähnlichen bekannten Mitteln erfolgen kann, steht für die nachfolgende Signalauswertung ein bekanntes und genau definiertes Signal zur Verfügung. Durch die gleichzeitige Erfassung des Referenzsignales und der Kavitationssignale kann mit Hilfe der Auswerteelektronik eine mögliche Veränderung des bekannten Referenzsignales sofort festgestellt werden. Da das Übertragungsverhalten innerhalb der zu untersuchenden oder zu überwachenden Maschine in gleicher Weise das eigentliche an seinem Entstehungsort produzierte Kavitationssignal verändert, kann mit Hilfe der bekannten Veränderung am Referenzsignal eine sehr genaue Aussage über das empfangene Kavitationssignal getroffen werden. Da nämlich üblicherweise ein Kavitationssignale erfassender Sensor ein sehr breites Frequenzspektrum registriert, ist durch den zeitgleichen Empfang der definierten Referenzsignale deren eindeutige Identifikation im empfangenen Frequenzspektrum möglich. Das Referenzsignal, das sich ungefähr im gleichen Frequenzbereich befindet, in dem auch Kavitationssignale auftreten, liegt typischerweise in einem Frequenzbereich oberhalb von 50 kHz. Die von der Einrichtung, beispielsweise einem Schallsender, ausgehenden Referenzsignale werden mit Hilfe der Auswerteelektronik von denjenigen Signalen unterschieden, die vom Auftreten der Kavitation herrühren, indem beispielsweise der Zeitpunkt eines elektrisch erzeugten Funkens zur Erkennung des daraus resultierenden Signals dient.

### Kurze Beschreibung der Erfindung

Ein Ausführungsbeispiel der Erfindung ist in den Zeichnungen dargestellt. Es zeigen die
- Fig. 1: eine Kavitationsmeßeinrichtung, die
- **Fig. 2 - 4**: Beispiele für erzeugte Referenzsignale und
- Fig. 5: eine andere Sensoranordnung.

### Wege zur Ausführung der Erfindung

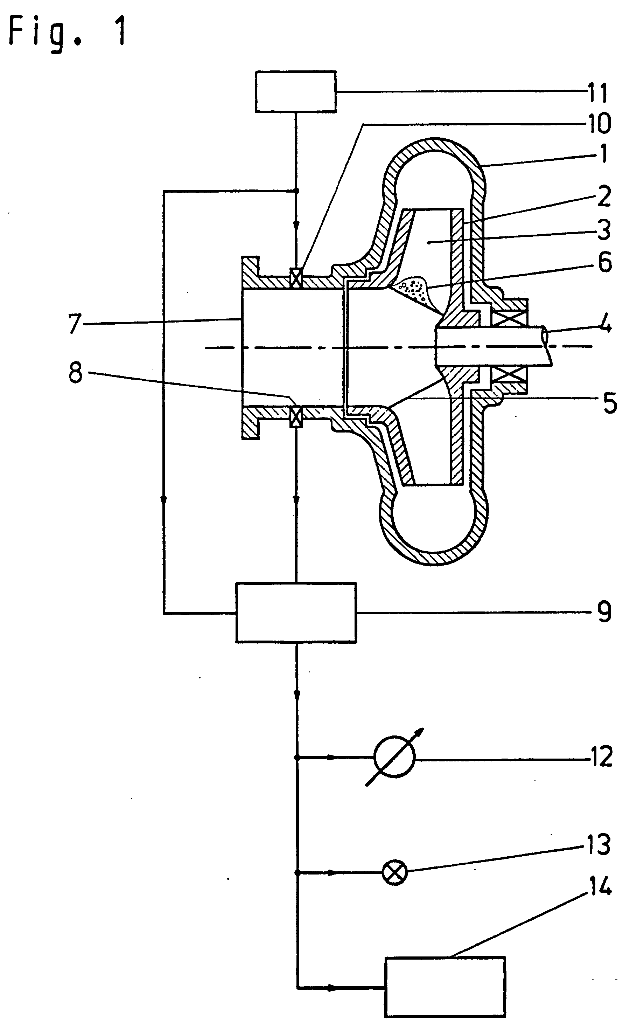

Fig. 1 zeigt schematisch am Beispiel einer Kreiselpumpe eine erfindungsgemäße Meßeinrichtung. Die Meßeinrichtung kann auch an jedem anderen technischen Gerät angebracht, in dem eine Kavitation zu überwachen ist. Innerhalb eines Gehäuses 1 befindet sich ein Laufrad 2 mit Schaufeln 3. Eine Welle 4 treibt das Laufrad 2 an. Aus Gründen der Übersichtlichkeit wurde ein innerhalb der Kreiselpumpe befindliches Fördermedium nicht dargestellt.

In der Darstellung liegt ein Betriebszustand vor, bei dem auf den Schaufeln 3 des Pumpenlaufrads 2 nahe der Schaufeleintrittskante 5 ein Kavitationsgebiet 6 existiert. Blasenimplosionen erfolgen vorwiegend im stromabwärts gelegenen Teil eines Kavitationsgebiets 6. Von den Blasenimplosionen gehen Schallsignale in der Form von Wechseldrücken aus. Diese breiten sich in der in dem Gerät befindlichen Flüssigkeit aus. Ein bei diesem Ausführungsbeispiel in der Wand eines Saugstutzen 7 des Gehäuses 1 angeordneter Sensor 8 empfängt die Schallsignale und wandelt sie in elektrische Signale. Der Sensor kann ein Hydrophon, ein piezoelektrischer oder piezoresistiver oder ein nach einem anderen Prinzip wirkender Wechseldruckaufnehmer sein, der auch im Frequenzbereich oberhalb etwa 50 kHz eingesetzt werden kann. Die elektrischen Signale werden einer Signalverarbeitungs-Elektronik 9 zugeführt, die z. B. eine Filterung, Verstärkung, Abtastung, Digitalisierung, Signalanalyse, Signalkorrektur und weitere Funktionen vornimmt.

In der einem Sensor 8 gegenüberliegenden Wand des Saugstutzen 7 ist als Referenzsignale erzeugende Einrichtung 10 ein Schallsender 10 eingebaut. Dieser kann z. B. ein nach dem piezoelektrischen, nach dem elektrodynamischen, nach dem magnetostriktiven oder einem anderen Prinzip wirkender Unterwasserschallsender sein. Um durch die Anordnung von Aufnehmer und Schallsender die Strömung in dem Gerät nicht zu stören oder auch um Aufnehmer und Sender nicht der unmittelbaren Einwirkung der gepumpten Flüssigkeit auszusetzen, können diese auch in Taschen, Aussparungen oder Vertiefungen der Wand angeordnet werden, die mit Flüssigkeit gefüllt sind und von dem Innenraum des Pumpengehäuses durch eine flüssigkeitsundurchlässige Zwischenwand aus schallweichem Material (z. B. Kunststoff) abgetrennt sind. Die der gepumpten Flüssigkeit zugewandte Oberfläche einer solchen Zwischenwand wird dabei vorzugsweise der Gehäuseinnenkontur angeglichen.

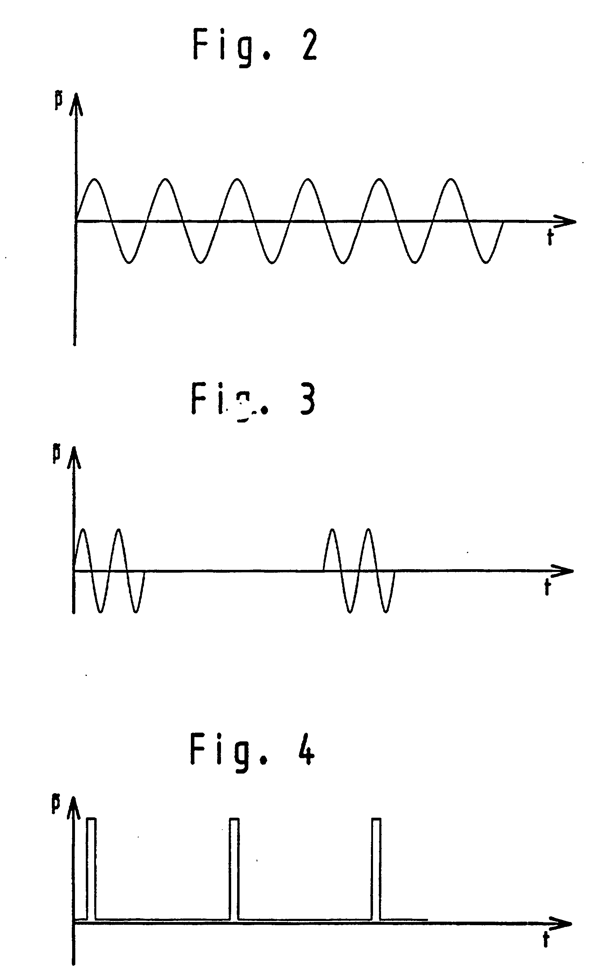

In den Fig. 2 - 4 sind verschiedene Signalformen dargestellt, die eine Referenzsignale erzeugende Einrichtung in Form eines Schallsenders in das Fördermedium einspeist. Die Signale werden mit bekanntem Zeitverlauf und bekannter Stärke abgeschickt. Diese Signale können z. B. ein Dauerton mit bekannter Frequenz (Fig. 2), in bestimmten Abständen wiederholte Töne bekannter Frequenz und Dauer (Fig. 3) oder impulsartige Zeitverläufe (Fig. 4) sein.

Die Generierung dieser Signale und die Ansteuerung des Schallsenders erfolgt vorzugsweise mit Hilfe einer weiteren Elektronik-Einheit 11, die auch unmittelbar mit der Empfänger-Elektronik 9 verbunden ist, um dieser unmittelbar das nicht durch den Übertragungsweg veränderte Original-Sendesignal zu übermitteln. Anhand der Information über Frequenz und/oder Zeitpunkt des gesendeten Signals kann die Signalverarbeitungs-Elektronik 7, 9 den von dem Schallsender 10 stammenden und mit dem Sensor 8 empfangenen Signalanteil von dem mit dem gleichen Sensor 8 empfangenen, jedoch von den Blasenimplosionen in dem Kavitationsgebiet 6 ausgehenden Signalanteil unterscheiden. Der auf diese Weise identifizierte empfangene Signalanteil, der von dem Schallsender 10 stammt, wird in der Signalverarbeitungs-Elektronik 9 mit dem Original-Sendesignal verglichen. Aus diesem Vergleich ermittelt die Signalverarbeitungs-Elektronik 9 eine Übertragungs-bzw. Korrekturfunktion, die das Ausbreitungsverhalten von Signalen auf dem Übertragungsweg von dem Sender 10 zu dem Sensor 8 kennzeichnet. Da der Sender 10 in räumlicher Nähe zu dem Kavitationsgebiet 6 angeordnet ist, ist die ermittelte Übertragungs- bzw. Korrekturfunktion auch für das Ausbreitungsverhalten der von den Blasenimplosionen stammenden Signale von deren Entstehungsort bis zu dem Sensor 8 kennzeichnend. Die von den Blasenimplosionen stammenden Signalanteile werden daher von der Signalverarbeitungs-Elektronik 9 anhand der ermittelten Übertragungs- bzw. Korrekturfunktion korrigiert und somit auf ihre nicht durch den Übertragungsweg veränderte und beeinflußte Ausgangsgröße zurückgerechnet. Die so mit Hilfe der Signalverarbeitungs-Elektronik 9 ermittelten Ergebnis-Größen stellen ein unmittelbares und nicht durch Veränderungen im Übertragungsweg beeinflußtes Maß für die Intensität des vorliegenden Kavitationszustands dar. Die Ergebnisgröße kann als Ausgangs-Signal der Signalverarbeitungs-Elektronik 9 durch ein Anzeige-Instrument 12 angezeigt werden. Weiter kann dieses Ausgangs-Signal bei Überschreiten eines Grenzwerts zur Auslösung einer Warnanzeige 13 und/oder zur Steuerung oder Regelung des Pumpen-Betriebszustands, z. B. als Rückführung in einem geschlossenen Regelkreis, dienen. Ein solcher Regelkreis ist als Bauteil 14 dargestellt. Für die letztgenannten Funktionen kann die aus den empfangenen und verarbeiteten Kavitationssignalen gewonnene Ergebnisgröße auch mit anderen Informationen, z. B. über die Pumpenbauart, den Laufradwerkstoff, die gepumpte Flüssigkeit, die ebenfalls in der Signalverarbeitungs-Elektronik 9 abgespeichert sein können, verknüpft und bewertet werden.

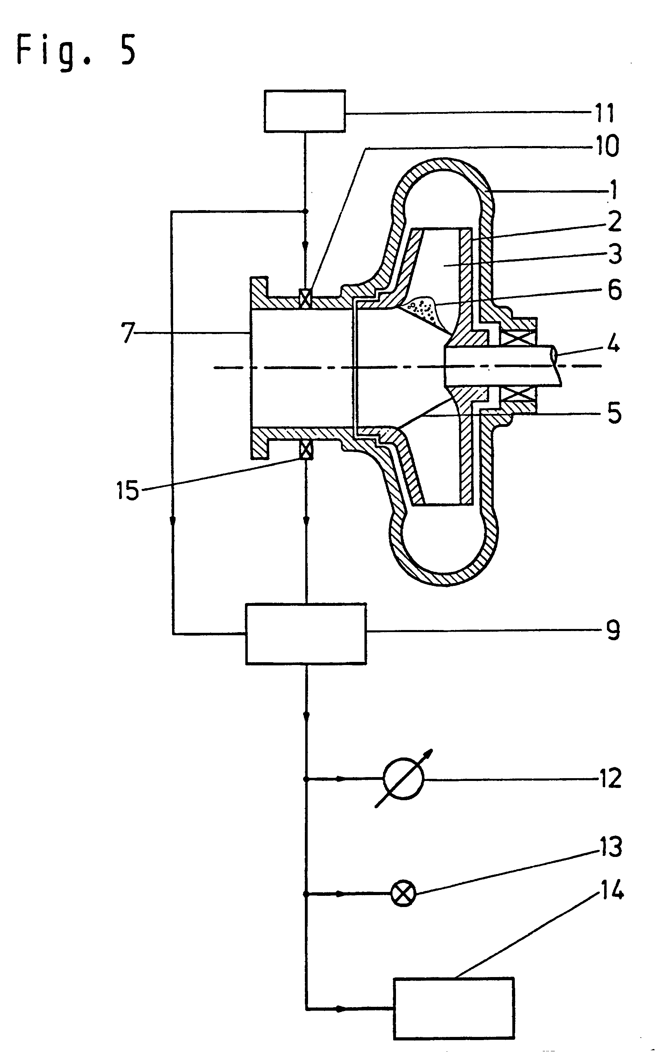

In der Fig. 5 ist eine andere mögliche Ausgestaltung der Erfindung gezeigt. Diese verwendet zur Erfassung und Wandlung von Signalen, die von den Blasenimplosionen im Kavitationsgebiet 6 stammen sowie von dem Schallsender 10 stammen, an Stelle eines Wechseldruckaufnehmers einen Sensor 15, der an die äußere Oberfläche des Gehäuses 1 angekoppelt ist und deren hochfrequente Vibrationen, den sogenannten Körperschall erfaßt. Neben konventionellen Körperschall-Sensoren, also z. B. piezoelektrischen Beschleunigungs-Sensoren, sind sogenannte SEA-Sensoren, die speziell für die Schall-Emissions-Analyse im Frequenzbereich oberhalb 50 kHz Bereich eingesetzt werden, für die Erfassung von Signalen, die von Blasenimplosionen stammen, besonders geeignet. Der Sensor 15 kann, wie in Fig. 5 gezeigt; etwa diametral gegenüber dem Schallsender 10 auf der äußeren Oberfläche des Saugstutzens 7 des Pumpengehäuses angeordnet werden. Die Anordnung des Sensors 15 kann jedoch auch an beliebigen anderen Stellen der äußeren Oberfläche der Pumpe erfolgen. Die in der oben beschriebenen Weise ermittelte Übertragungs- bzw. Korrekturfunktion beinhaltet in diesem Fall auch die Umsetzung von Wechseldrücken ( in der Flüssigkeit) in Körperschall-Schwingungen (in der mechanischen Struktur) und deren Weiterleitung bis zum Sensor 15.

Eine Referenzsignale erzeugende Einrichtung 10, die nach einem der oben geschilderten Prinzipien wirkt, kann auch aus einer Vorrichtung zur Erzeugung von elektrischen Funken reproduzierbarer Stärke bestehen. Die Funken entstehen innerhalb der Flüssigkeit zwischen zwei Elektroden beim Anlegen eines elektrischen Spannungs- bzw. Stromimpulses. Die Elektroden des Funkenerzeugers können innerhalb der Flüssigkeit oder in einer von dieser getrennten, flüssigkeitsgefüllten Tasche, Vertiefung oder Aussparung der Innenwand angeordnet sein. Die Erzeugung der Spannungs- bzw. Strom-Impulse kann z. B. durch Entladung eines elektrischen Kondensators oder nach dem elektrischen Induktions-Prinzip, wie z. B. bei Zündsystemen von Verbrennungsmotoren, erfolgen. Mit dieser Vorrichtung werden zu bestimmten Zeitpunkten Funken und davon ausgehende Signale erzeugt. Die Steuerung der Funkenerzeugung erfolgt über eine Elektronik-Einheit, die auch mit der Signalverarbeitungseinheit verbunden ist und dieser die Information über den Zeitpunkt und die Stärke der Spannungs- bzw. Stromimpulses übermittelt, um das Referenzsignal zu identifizieren. Über eine vor dem Einbau vorgenommene Kalibrierung ist dazu auch die Stärke der von dem Funken ausgehenden Signale unmittelbar bekannt. Die Ermittlung und Berücksichtigung der Übertragungs- bzw. Korrekturfunktion erfolgt auch hier prinzipiell in der oben beschriebenen Weise. Ein besonderer Vorteil eines impulsartigen Referenzsignals besteht darin, daß aus diesem bei entsprechender Ausgestaltung der Signalverarbeitungs-Elektronik 9 z. B. mit Hilfe einer Fourier-Transformation (FFT), die Übertragungs- bzw. Korrekturfunktion auch in Abhängigkeit der Frequenz für den relevanten Frequenzbereich ermittelt und berücksichtigt werden kann.

## Patentansprüche

1. Verfahren zur Messung von Kavitationssignalen an einem hydraulichen Gerät, wie Strömungsmaschine, Kreiselpumpe, Armatur oder dergleichen, wobei Kavitationssignale erfassende Sensoren an dem Gerät angeordnet und mit einer elektronischen Recheneinheit verbunden sind, **dadurch gekennzeichnet, daß** an dem Gerät eine Referenzsignale erzeugende Einrichtung (10, 11) angeordnet ist und daß die elektronische Recheneinheit (9) anhand während des laufenden Betriebes feststellbarer Veränderungen des empfangenen Referenzsignales unbekannte Einflußgrößen im Übertragungsweg eines empfangenen Kavitationssignales während des laufenden Betriebes ausgleicht.

2. Verfahren nach Anspruch 1, **dadurch gekennzeichnet, daß** der Empfang der Referenzsignale und der Kavitationssignale mit einem Sensor (8, 15) erfolgt.

3. Verfahren nach Anspruch 1 oder 2, **dadurch gekennzeichnet, daß** der Empfang der Referenzsignale und der Kavitationssignale zeitgleich erfolgt und die anschließende Signalauswertung das aktuelle Übertragungsverhalten der Signale unmittelbar berücksichtigt.

4. Verfahren nach Anspruch 1, 2 oder 3, **dadurch gekennzeichnet, daß** ein korrigiertes Kavitationssignal eine Anzeige- (12), eine Warn- (13), eine Steuer-oder Regeleinrichtung (14) beeinflußt.

5. Einrichtung zur Erfassung von Kavitationssignalen an hydraulischen Geräten, wie Strömungsmaschinen, Kreiselpumpen, Armaturen oder dergleichen, wobei an den Geräten Kavitationssignale erfassende Sensoren angebracht und mit einer Auswerteelektronik verbunden sind, **gekennzeichnet durch** eine Einrichtung zur Erzeugung von Referenzsignalen (10, 11) innerhalb der Geräte, mindestens einen Sensor (8, 15) zur Erfassung von Kavitationssignal und Referenzsignal, eine mit dem mindestens einem Sensor (8, 15) verbundene Auswerteelektronik (9) zur laufenden Korrektur eines empfangenen Kavitationssignales mittels der Übertragungsfunktion des Referenzsignales.

6. Einrichtung nach Anspruch 5, **dadurch gekennzeichnet, daß** das Referenzsignal einen definierten Zeitverlauf aufweist.

7. Einrichtung nach Anspruch 5 oder 6, **dadurch gekennzeichnet, daß** das Referenzsignal eine definierte Frequenz aufweist.

8. Einrichtung nach Anspruch 5, 6 oder 7, **dadurch gekennzeichnet, daß** ein Funkengenerator, eine Unterwasser-Schallquelle oder vergleichbares die Referenzsignal erzeugende Einrichtung (10, 11) bildet.

9. Einrichtung nach einem der Ansprüche 5 bis 8, **dadurch gekennzeichnet, daß** die Auswerteelektronik (9) und die Sensoren (8, 15) eine online Signalerfassung und Signalverarbeitung aufweist.

## Claims

1. Method of measuring cavitation signals on a hydraulic item of equipment, such as a fluid-flow machine, centrifugal pump, valve or the like, sensors picking up cavitation signals being arranged on the item and connected to an electronic computing unit, **characterized in that** a device (10, 11) generating reference signals is arranged on the item and **in that** the electronic computing unit (9) compensates for unknown influencing variables in the transmission path of a received cavitation signal during operation on the basis of detectable changes in the received reference signal.

2. Method according to Claim 1, **characterized in that** the reception of the reference signals and of the cavitation signals takes place with a sensor (8, 15).

3. Method according to Claim 1 or 2, **characterized in that** the reception of the reference signals and of the cavitation signals takes place simultaneously and the subsequent signal evaluation directly takes into account the current transmission behaviour of the signals.

4. Method according to Claim 1, 2 or 3, **characterized in that** a corrected cavitation signal influences a display device (12), a warning device (13) or an open-loop or closed-loop control device (14).

5. Device for picking up cavitation signals on hydraulic items of equipment, such as fluid-flow machines, centrifugal pumps, valves or the like, sensors picking up cavitation signals being fitted on the items of equipment and connected to evaluation electronics, **characterized by** a device for generating reference signals (10, 11) within the items of equipment, at least one sensor (8, 15) for picking up the cavitation signal and reference signal and evaluation electronics (9), connected to the at least one sensor (8, 15), for the continuous correction of a received cavitation signal by means of the transmission function of the reference signal.

6. Device according to Claim 5, **characterized in that** the reference signal has a defined time characteristic.

7. Device according to Claim 5 or 6, **characterized in that** the reference signal has a defined frequency.

8. Device according to Claim 5, 6 or 7, **characterized in that** a spark generator, an underwater sound source or the like forms the device (10, 11) generating the reference signal.

9. Device according to one of Claims 5 to 8, **characterized in that** the evaluation electronics (9) and the sensors (8, 15) have online signal acquisition and signal processing.

## Revendications

1. Procédé pour mesurer des signaux de cavitation sur un appareil hydraulique, comme une machine à turbine, une pompe centrifuge, une tuyauterie ou similaire, des capteurs détectant les signaux de cavitation étant disposés sur l'appareil et reliés à un calculateur électronique, **caractérisé en ce qu'**un dispositif générateur de signaux de référence (10, 11) est disposé sur l'appareil et que le calculateur électronique (9) compense un signal de cavitation reçu pendant le fonctionnement en continu au moyen de modifications constatables du signal de référence reçu pendant le fonctionnement en continu.

2. Procédé selon la revendication 1, **caractérisé en ce que** la réception des signaux de référence et des signaux de cavitation s'effectue avec un capteur (8, 15).

3. Procédé selon la revendication 1 ou 2, **caractérisé en ce que** la réception des signaux de référence et des signaux de cavitation s'effectue de manière synchrone et que l'interprétation des signaux qui suit tient directement compte du comportement de transfert actuel des signaux.

4. Procédé selon la revendication 1, 2 ou 3, **caractérisé en ce qu'**un signal de cavitation corrigé influence un dispositif d'affichage (12), un dispositif d'avertissement (13), un dispositif de commande ou de régulation (14).

5. Dispositif de détection de signaux de cavitation sur des appareils hydrauliques, comme des machines à turbine, des pompes centrifuges, des tuyauteries ou similaires, des capteurs détectant les signaux de cavitation étant disposés sur l'appareil et reliés à un circuit électronique d'interprétation, **caractérisé par** un dispositif générateur de signaux de référence (10, 11) à l'intérieur de l'appareil, au moins un capteur (8, 15) pour détecter le signal de cavitation et le signal de référence, un circuit électronique d'interprétation relié avec l'au moins un capteur (8, 15) pour corriger en continu un signal de cavitation reçu à l'aide de la fonction de transfert du signal de référence.

6. Dispositif selon la revendication 5, **caractérisé en ce que** le signal de référence présente un tracé donné dans le temps.

7. Dispositif selon la revendication 5 ou 6, **caractérisé en ce que** le signal de référence présente une fréquence donnée.

8. Dispositif selon la revendication 5, 6 ou 7, **caractérisé en ce qu'**un générateur radioélectrique, une source sonore sous-marine ou similaire forme le dispositif (10, 11) qui génère le signal de référence.

9. Dispositif selon l'une des revendications 5 à 8, **caractérisé en ce que** le circuit électronique d'interprétation (9) et les capteurs (8, 15) présentent une acquisition et un traitement en ligne des signaux.
